# EUROPEAN PATENT SPECIFICATION

(11) **EP 1 247 028 B1**
(45) Date of publication and mention of the grant of the patent: **09.02.2005**
(21) Application number: 01906391.6
(22) Date of filing: 15.01.2001
(51) Int. Cl.: F16D 65/16, H02K 7/06, F16H 25/20

(54) **ACTUATOR UNIT AND BRAKE CALLIPER**
BREMSAKTUATOR UND SCHEIBENBREMSSATTEL
ACTIONNEUR ET ETRIER DE FREIN

(30) Priority: 14.01.2000 NL 1014064
(43) Date of publication of application: 09.10.2002
(73) Proprietor: SKF Engineering & Research Centre B.V., 3430 DT Nieuwegein (NL)
(72) Inventor: KAPAAN, Hendrikus, Jan, NL-3435 DM Nieuwegein (NL)
(74) Representative: van Westenbrugge, Andries
(86) International application number: PCT/NL2001/000022
(87) International publication number: WO 2001/051825

(56) References cited:
- WO-A-97/17553
- DE-A- 19 913 939
- PATENT ABSTRACTS OF JAPAN vol. 1997, no. 03, 31 March 1997 (1997-03-31) & JP 08 296674 A (AKEBONO BRAKE RES &DEV CENTER LTD), 12 November 1996 (1996-11-12)

## Description

The invention is related to an actuator, comprising a housing with a motor, an actuating member and a screw mechanism having a nut and a screw, said screw mechanism providing a linear movement of the actuating member with respect to the housing in response to a rotational movement delivered by the motor, said nut being fixed with respect to the housing, and the actuating member having a bore which is provided with an internal screw thread, the screw engaging both the internal screw thread of the actuating member and the internal screw thread of the nut.

Such actuator is known from JP-A-8296674, and can be applied in e.g. a vehicle brake, clutch, steer, continuously variable transmission, gear box transmission, etcetera.

Said known screw actuator is supported with respect to the housing by means of a bearing which is capable of accommodating axial and/or radial loads, such as an axial thrust bearing for carrying the axial forces exerted on the brake pads in the case of an actuator applied in a disc brake.

The object of the invention is to provide an improved actuator. This object is achieved in that the internal screw thread of the actuating member has a pitch angle which is opposite to the pitch angle of the internal screw thread of the nut, and in that reduction gear means are provided between the motor and the screw mechanism.

The screw of the actuator according to the invention is rotatably supported with respect to the housing by the nut: in case the nut and the screw engage each other through balls, said balls act as support bearing balls for the screw.

A further advantage is that the actuating member, which should not rotate, can engage the rotating screw without interposition of a separate thrust bearing. This function is taken by the screw thread engagement between the actuating member and the screw.

In order to ensure the required load bearing capacity, the pitch diameter of the screw threads, the number of turns and the lead angle should be designed properly. However, as the screw threads and the associated balls act as bearing elements for supporting the rotating screw, no separate thrust bearing is necessary to take up the axial load. The overall dimensions of the actuator can therefore remain limited.

The internal screw threads of the nut and the actuating member can be designed in various ways. Preferably, the internal screw thread of the actuating member has a diameter which is equal to the diameter of the internal screw thread of the nut.

Preferably, the actuating member is a piston which is slidingly accommodated in a bore in housing. The nut is fixed in said bore, and the bore extends fully through the housing, and, at the end facing away from the actuating member, has an inwardly extending abutment against which the nut is supported. A load cell for measuring axial forces can be accommodated between the abutment and the nut.

The reduction gear means can be carried out in several ways as well. Preferably, a sleeve is provided which extends out of the bore at the end facing away from the actuating member, said support sleeve at one end having an outwardly extending flange which is held between the nut and the inwardly extending abutment, and at the other end has a support for the reduction gear means. Said support comprises a rolling element bearing, the outer ring of which carries an excentric gear wheel with outwardly pointing teeth which is part of an excentric gear reduction, said excentric gear wheel being rotatably accommodated on an excentric hub of said outer ring by means of an excentric bearing.

The excentric gear reduction provides a relatively high reduction ratio, which can be matched to the relatively large linear displacements of the actuating member upon rotating the actuator.

By means of a (ball) groove/spline connection the screw is drivable through a drive shaft, said drive shaft carrying a tooth gear wheel with inwardly pointing teeth which surround the teeth of the excentric gear wheel, which gear wheels mesh with only a part of their teeth.

The nut may comprise at least one recirculating device for the balls in one full winding between the nut and the screw. In this respect, the screw may have an throughgoing bore, one end of which comprises grooves for the (ball) groove/spline connection to the drive shaft, and the other end of which comprises an internal sleeve which supports the at least one recirculating device.

The invention is also related to a brake calliper comprising a housing with a motor, an actuating member and a screw mechanism having a nut and a screw, said screw mechanism providing a linear movement of the actuating member with respect to the housing in response to a rotational movement delivered by the motor, as well as reduction gear means between the motor and the screw mechanism.

According to the invention, the actuating member has a bore which is provided with an internal screw thread, the screw engaging both the internal screw thread of the actuating member and the internal screw thread of the nut.

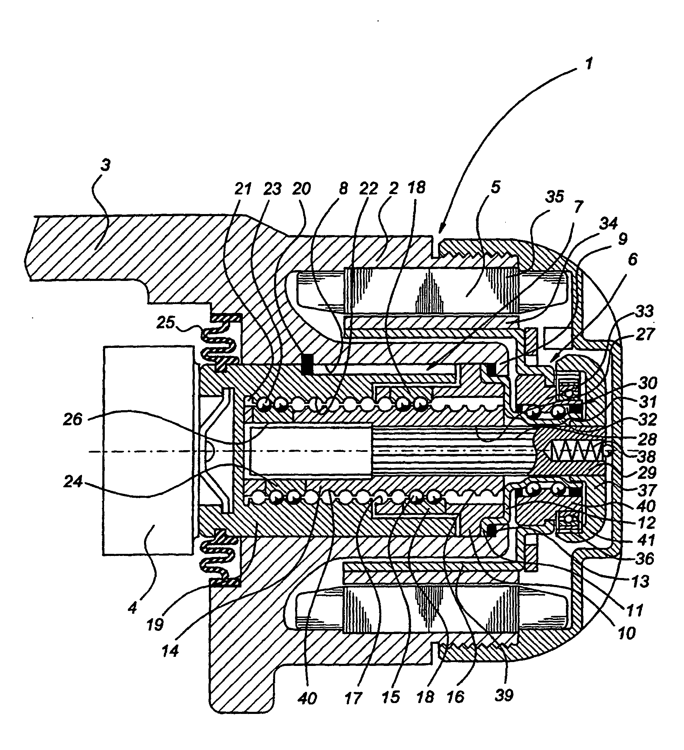

The invention will now be described further with reference to an actuator for a brake calliper, as shown in the figure.

The actuator 1 shown in the figure comprises a housing 2, which is connected to a partially shown claw piece 3. Said claw piece 3 carries two brake pads, one brake pad 4 of which is shown. The brake pads enclose a gap for accommodating a brake disc (not shown) of the disc brake in question.

The housing 2 carries a motor 5, which through reduction gear means 6 drives the screw mechanism 7.

Said screw mechanism 7 is accommodated in a through-going bore 8 of the housing 2, which bore at the end facing away from the brake pad 4 has an inwardly protruding flange 9.

Within the bore 8, the nut 10 of the screw mechanism 7 is fixed such that it cannot translate and rotate. The nut 10 rests against the outwardly protruding flange 11 of sleeve 12, which in turn through a load cell 13 rests against the flange 9.

The screw mechanism 7 furthermore contains a screw 14 and balls 15 which are in engagement with the screw threads 17, 16 of respectively the nut 10 and the screw 14.

The balls 15 are recirculated in the nut 10 by means of recirculating inserts 18.

Within the bore 8, furthermore a piston type actuating member 19 is accommodated. This actuating member 19 is movable in the axial direction, but non-rotatable through the spline/groove connection 20.

The actuating member has an internal bore 21 as well, provided with an internal screw thread 22.

The screw 14 extends into the bore 21 of the actuating member 19, and through balls 23 engages the internal screw thread 22 of the actuating member 19. The balls 23 can be recirculated in the screw by means of recirculating inserts 24. The screw thread 17 of the nut 10 has a pitch angle which is opposite to the pitch angle of the screw thread 22 of the actuating member 19 and consequently also the screw 14 has screw thread parts 16, 40 with opposite pitch angles.

By means of the bellows 25, the piston type actuating member 19 is protected from dirt.

The screw has an internal sleeve 26, which holds the recirculating inserts 24. Moreover, lubricant dosing means may be provided within said sleeve 26.

Furthermore, the screw 14 has an internal bore 27, which by means of a groove/spline connection 28 slidably engages the drive shaft 29. When the drive shaft 29 is rotated, the screw 14 rotates as well and displaces linearly with respect to the nut 10 and also with respect to the drive shaft 29. The piston type actuating member 19 is displaced linearly as well with respect to the screw 14, thus obtaining a relatively large linear displacement.

The screw thread part 40 of the screw 14, and the screw thread 22 of the actuating member 9 also act as a support bearing for the actuating member 19.

Having regard to the fact that a relatively large linear displacement is obtained through the double or tandem actuating action, a gear reduction 6 with a relatively large reduction ratio is necessary.

Said gear reduction 6 comprises a support 30, which has a bearing 31 the inner ring 32 of which forms a unity with the sleeve 12. The outer ring 33 of the bearing 31 is connected to the rotor 34 of the motor 5. The stator 35 is connected to the housing 2.

The outer ring 33 of the bearing 31 furthermore has an excentric hub 40, which carries an excentric bearing 41 which supports the excentric gear wheel 36, which meshes with part of the inwardly protruding teeth of the excentric gear wheel 37.

By rotating the excentric gear wheel 36 through the rotor 34, the gear wheel 37 is moved with a large reduction ratio.

The outer circumference of the outer ring 33 is of a somewhat smaller diameter than the opening defined by the inwardly protruding flange 9 of the bore 8. Thus, the complete assembly of the screw mechanism 7 and the gear reduction 6 can be shifted through the bore 8 up to the position shown in the figure. Subsequently, the rotor 34 is mounted, and finally the drive shaft 28 with gear wheel 37 is mounted.

In order to hold the drive shaft 29 in place, a spring support 31 is provided.

## Claims

1. Actuator (1), comprising a housing (2) with a motor (5), an actuating member (19) and a screw mechanism (7) having a nut (10) and a screw (14), said screw mechanism (7) providing a linear movement of the actuating member (19) with respect to the housing (2) in response to a rotational movement delivered by the motor (5), said nut (10) being fixed with respect to the housing (2), and the actuating member (19) having a bore (21) which is provided with an internal screw thread (22), the screw (14) engaging both the internal screw thread (22) of the actuating member (19) and the internal screw thread (17) of the nut (10), **characterised in that** the internal screw thread (22) of the actuating member (19) has a pitch angle which is opposite to the pitch angle of the internal screw thread (17) of the nut (10), and reduction gear means (6) are provided between the motor (5) and the screw mechanism (7).

2. Actuator according to claim 1, wherein the internal screw thread (22) of the actuating member (19) has a diameter which is equal to the diameter of the internal screw thread (47) of the nut (10).

3. Actuator according to any of the preceding claims, wherein the actuating member is a piston (19) which is slidingly accommodated in a bore (8) in housing (2).

4. Actuator according to claim 3, wherein the nut (10) is fitted in the bore (8) in the housing (2).

5. Actuator according to claim 4, wherein the bore (8) extends fully through the housing (2), and, at the end facing away from the actuating member (19), has an inwardly extending abutment (9) against which the nut (10) is supported.

6. Actuator according to claim 5, wherein a sensor, e.g. a load cell (13) for measuring axial forces is accommodated between the abutment (9) and the nut (10).

7. Actuator according to claim 5 or 6, wherein a sleeve (12) is provided which extends inwardly with respect to the bore (8) at the end facing away from the actuating member (19), said sleeve (12) at one end having an outwardly extending flange (11) which is held between the nut (10) and the inwardly extending abutment (9), and at the other end has a support (30) for the reduction gear means (6).

8. Actuator according to claim 7, wherein the support (30) comprises a rolling element bearing (31), the outer ring (33) of which carries an excentric gear wheel (36) with outwardly pointing teeth which is part of an excentric gear reduction (6), said excentric gear wheel (36) being rotatably accommodated on an excentric hub (40) of said outer ring (33) by means of an excentric bearing (41),

9. Actuator according to claim 8, wherein the screw (14) by means of a (ball) groove/spline (28) connection is drivable through a drive shaft (29), said drive shaft (29) carrying a tooth gear wheel (37) with inwardly pointing teeth which surround the teeth of the excentric gear wheel (36), which gear wheels (36, 37) mesh with only a part of their teeth.

10. Actuator according to any of claims 6-9, wherein the reduction gear means comprises a planetary gear reduction.

11. Actuator according to claim 10, wherein the reduction gear means comprises an excentric gear reduction.

12. Actuator according to claim 8, 9, 10 or 11, wherein the outer ring (33) of the rolling element bearing (31) carries a rotor sleeve (39) onto which the rotor (34) of the motor (5) is mounted.

13. Actuator according to claim 12, wherein the outer ring of the rolling element bearing and the rotor sleeve are integrated in one component.

14. Actuator according to claim 12 or 13, wherein a sensor is mounted between the housing and the rotor sleeve.

15. Actuator according to any of the preceding claims, wherein the screw threads (16, 40, 17, 22) of the screw (14), the nut (10) and the actuating member (19) engage each other through balls (15, 23).

16. Actuator according to claim 15, wherein the screw thread (17) of the nut (10), the corresponding screw thread part (16) of the screw (14) and the respective balls (15) are of a size different from the size of the screw thread (16) of the actuating member (19), the screw thread part (40) of the screw (14) and the respective balls (23).

17. Actuator according to claim 15 or 16, wherein nut (10) comprises at least one recirculating device (18) for the balls (15) in one full winding between the nut (10) and the screw (14).

18. Actuator according to claim 15, 16 or 17, wherein the screw (14) comprises at least one recirculating device (24) for the balls (23) in one full winding between the screw (14) and the actuating member (19).

19. Actuator according to claim 18, wherein the screw (14) has a throughgoing bore (27), one end of which comprises grooves for the (ball) groove/spline connection (28) to the drive shaft (29), and the other end of which comprises an internal sleeve (26) which supports the at least one recirculating device (24).

20. Actuator according to claim 19, wherein the sleeve is part of a self-contained grease dosing unit.

21. Actuator according to any of the preceding claims, wherein at least one of the components is obtained by means of powder metallurgy.

22. Bake calliper, comprising a claw piece (3) which carries at least two opposite brake pads (4) between which a brake disc can be accommodated, and an actuator (1) according to any of the preceding claims, said actuator (1) comprising a housing (2) connected to the claw piece (3), a motor (5), an actuating member (19) and a screw mechanism (7) having a nut (10) and a screw (14), said screw mechanism (7) providing a linear movement of the actuating member (19) with respect to the housing (2) in response to a rotational movement delivered by the motor (5), as well as reduction gear means (6) between the motor (5) and the screw mechanism (7), the nut (10) being fixed with respect to the housing (2), and the actuating member (19) having a bore (21) which is provided with an internal screw thread (22), the screw (14) engaging both the internal screw thread (22) of the actuating member (19) and the internal screw thread (17) of the nut (10) **characterised in that** the internal screw thread (22) of the actuating member (19) has a pitch angle which is opposite to the pitch angle of the internal screw thread (17) of the nut (10), and **in that** reduction gear means (6) are provided between the motor (5) and the screw mechanism (7).

## Patentansprüche

1. Stellorgan (1), umfassend ein Gehäuse (2) mit einem Motor (5), einem Stellglied (19) und einem Schraubmechanismus (7), der eine Buchse (10) und eine Schraube (14) aufweist, wobei der besagte Schraubmechanismus (7) für eine lineare Bewegung des Stellgliedes (19) in Bezug auf das Gehäuse (2) als Antwort auf eine Drehbewegung, die durch den Motor (5) ausgeübt wird sorgt, wobei die besagte Buchse (10) in Bezug auf das Gehäuse (2) ortsfest ist, und wobei das Stellglied (19) eine Bohrung (21) aufweist, welche mit einem inneren Schraubgewinde (22) versehen ist, wobei die Schraube (14) sowohl das innere Schraubgewinde (22) des Stellgliedes (19) als auch das innere Schraubgewinde (17) der Buchse (10) erfasst, **dadurch gekennzeichnet, dass** das innere Schraubgewinde (22) des Stellgliedes (19) einen Steigungswinkel aufweist, welcher entgegengesetzt ist zum Steigungswinkel des inneren Schraubgewindes (17) der Buchse (10), und wobei ein Untersetzungsgetriebemittel (6) zwischen dem Motor (5) und dem Schraubmechanismus (7) bereitgestellt wird.

2. Stellorgan gemäß Anspruch 1, wobei das innere Schraubgewinde (22) des Stellgliedes (19) einen Durchmesser hat, welcher gleich ist zu dem Durchmesser des inneren Schraubgewindes (47) der Buchse (10).

3. Stellglied gemäß einem der vorhergehenden Ansprüche, wobei das Stellglied ein Kolben (19) ist, welcher gleitend in einer Bohrung (8) im Gehäuse (10) aufgenommen ist.

4. Stellorgan gemäß Anspruch 3, wobei die Buchse (10) in die Bohrung (8) im Gehäuse (2) eingefügt ist.

5. Stellglied gemäß Anspruch 4, wobei sich die Bohrung (8) vollständig durch das Gehäuse (2) erstreckt und an dem Ende, das von dem Stellglied (19) abgewandt ist, eine sich nach innen erstreckende Schulter (9) aufweist, gegen welche die Buchse (10) gestützt ist.

6. Stellorgan gemäß Anspruch 5, wobei ein Sensor, z. B. eine Lastzelle (13) zum Messen von axialen Kräften zwischen der Schulter (9) und der Buchse (10) aufgenommen ist.

7. Stellorgan gemäß Anspruch 5 oder 6, wobei eine Hülse (12) bereitgestellt wird, welche sich an dem Ende, das von dem Stellglied (19) abgewandt ist, sich in Bezug auf die Bohrung (8) nach innen erstreckt, wobei die besagte Hülse (12) an einem Ende einen sich nach außen erstreckenden Flansch (11) aufweist, welcher zwischen der Buchse (10) und der sich nach innen erstreckenden Schulter (9) gehalten wird, und sie an dem anderen Ende einen Träger (30) für die Untersetzungsgetriebemittel (6) aufweist.

8. Stellorgan gemäß Anspruch 7, wobei der Träger (30) ein Wälzlager (38) umfasst, dessen äußerer Ring (33) ein exzentrisches Getrieberad (36) mit nach außen zeigenden Zähnen trägt, welches ein Teil einer exzentrischen Getriebeuntersetzung (6) ist, wobei das besagte exzentrische Getrieberad (36) drehbar auf einer exzentrischen Nabe (40) des besagten äußeren Rings (33) mit Hilfe eines exzentrischen Lagers (41) aufgenommen ist.

9. Stellorgan gemäß Anspruch 8, wobei die Schraube (14) mit Hilfe einer (Kugel) Nut/Feder-Verbindung (28) durch eine Antriebswelle (29) angetrieben werden kann, wobei die besagte Antriebswelle (29) ein Getriebezahnrad (37) mit nach innen zeigenden Zähnen trägt, welches die Zähne des exzentrischen Getrieberades (36) umgibt, dessen Getrieberäder (36), (37) nur mit einem Teil ihrer Zähne ineinander greifen.

10. Stellorgan gemäß einem der Ansprüche 6-9, wobei das Untersetzungsgetriebemittel eine Planetengetriebeuntersetzung umfasst.

11. Stellorgan gemäß Anspruch 10, wobei das Untersetzungsgetriebemittel eine exzentrische Getriebeuntersetzung umfasst.

12. Stellorgan gemäß Anspruch 8, 9, 10, oder 11, wobei der äußere Ring (33) des Wälzlagers (31) eine Rotorhülse (39) trägt, auf welcher der Rotor (34) des Motors (5) montiert ist.

13. Stellorgan gemäß Anspruch 12, wobei der äußere Ring des Wälzlagers und die Rotorhülse in einem Bauteil integriert sind.

14. Stellorgan gemäß Anspruch 12 oder 13, wobei ein Sensor zwischen dem Gehäuse und der Rotorhülse montiert ist.

15. Stellorgan gemäß einem der vorhergehenden Ansprüche, wobei die Schraubgewinde (16), (40), (17), (22) der Schraube (14), der Buchse (10) und des Stellgliedes (19) einander über Kugeln (15), (23) erfassen.

16. Stellorgan gemäß Anspruch 15, wobei das Schraubgewinde (17) der Buchse (10), der entsprechende Schraubgewindeteil (16) der Schraube (14) und die jeweiligen Kugeln (15) von anderer Größe sind als die Größe des Schraubgewindes (16) des Stellgliedes (19), des Schraubgewindeteils (40) der Schraube (14) und der jeweiligen Kugeln (23).

17. Stellorgan gemäß Anspruch 15 oder 16, wobei die Buchse (10) zumindest eine Umlaufvorrichtung (18) für die Kugeln (15) in einer vollen Windung zwischen der Buchse (10) und der Schraube (14) umfasst.

18. Stellorgan gemäß Anspruch 15, 16 oder 17, wobei die Schraube (14) zumindest eine Umlaufvorrichtung (24) für die Kugeln (23) in einer vollen Windung zwischen der Schraube (14) und dem Stellglied (19) umfasst.

19. Stellorgan gemäß Anspruch 18, wobei die Schraube (14) eine durchgehende Bohrung (27) aufweist, deren eines Ende Nute für die (Kugel) Nut/Feder-Verbindung (28) zur Antriebswelle (29) aufweist und deren anderes Ende eine innere Hülse (26) umfasst, die zumindest eine Umlaufvorrichtung (24) trägt.

20. Stellorgan gemäß Anspruch 19, wobei die Hülse Teil einer unabhängigen Schmiermitteldosierungseinheit ist.

21. Stellorgan gemäß einem der vorhergehenden Ansprüche, wobei zumindest eines der Bauteile mit Hilfe von Sintertechnik (engl. powder metallurgy) enthalten wird.

22. Bremssattel, umfassend ein Klauenteil (3), welches zumindest zwei gegenüberliegende Bremsbeläge (4) trägt, zwischen welchen eine Bremsscheibe aufgenommen werden kann, sowie ein Stellorgan (1) gemäß einem der vorhergehenden Ansprüche, wobei das Stellorgan (1) ein Gehäuse (2) umfasst, das verbunden ist mit dem Klauenteil (3), einem Motor (5), einem Stellglied (19) und einen Schraubmechanismus (7), der eine Buchse (10) und eine Schraube (14) aufweist, wobei der besagte Schraubmechanismus (7) für eine lineare Bewegung des Stellgliedes (19) in Bezug auf das Gehäuse (2) als Antwort auf eine Drehbewegung, die durch den Motor (5) ausgeübt wird, sorgt, sowie ein Untersetzungsgetriebemittel (6) zwischen dem Motor (5) und dem Schraubmechanismus (7), wobei die Buchse (10) in Bezug auf das Gehäuse (2) ortsfest ist und das Stellglied (19) eine Bohrung (21) aufweist, welche mit einem inneren Schraubgewinde (22) versehen ist, wobei die Schraube (14) sowohl das innere Schraubgewinde (22) des Stellglieds (19) als auch das innere Schraubgewinde (17) der Buchse (10) erfasst, **dadurch gekennzeichnet, dass** das innere Schraubgewinde (22) des Stellgliedes (19) einen Steigungswinkel aufweist, welcher entgegengesetzt ist zum Steigungswinkel des inneren Schraubgewindes (17) der Buchse (10) und **dadurch**, dass ein Untersetzungsgetriebemittel (6) zwischen dem Motor (5) und dem Schraubmechanismus (7) bereitgestellt wird.

## Revendications

1. Dispositif d'actionnement (1), comportant un boîtier (2) avec un moteur (5), un élément d'actionnement (19) et un mécanisme à vis (7) ayant un écrou (10) et une vis (14), ledit mécanisme à vis (7) assurant un mouvement linéaire de l'élément d'actionnement (19) par rapport au boîtier (2) en réponse à un mouvement de rotation délivré par le moteur (5), ledit écrou (10) étant fixe par rapport au boîtier (2), et l'élément d'actionnement (19) ayant un alésage (21) qui est pourvu d'un filet de vis interne (22), la vis (14) engageant à la fois le filet de vis interne (22) de l'élément d'actionnement (19) et le filet de vis interne (17) de l'écrou (10), **caractérisé en ce que** le filet de vis interne (22) de l'élément d'actionnement (19) a un angle de pas qui est opposé à l'angle de pas du filet de vis interne (17) de l'écrou (10), et des moyens de réduction à engrenage (6) sont prévus entre le moteur (5) et le mécanisme à vis (7).

2. Dispositif d'actionnement selon la revendication 1, dans lequel le filet de vis interne (22) de l'élément d'actionnement (19) a un diamètre qui est égal au diamètre du filet de vis interne (47) de l'écrou (10).

3. Dispositif d'actionnement selon l'une quelconque des revendications précédentes, dans lequel l'élément d'actionnement est un piston (19) qui est reçu de façon coulissante dans un alésage (8) dans le boîtier (2).

4. Dispositif d'actionnement selon la revendication 3, dans lequel l'écrou (10) est logé dans l'alésage (8) dans le boîtier (2).

5. Dispositif d'actionnement selon la revendication 4, dans lequel l'alésage (8) s'étend totalement à travers le boîtier (2), et, à l'extrémité orientée à l'écart de l'élément d'actionnement (19), a une butée s'étendant vers l'intérieur (9) contre laquelle est supporté l'écrou (10).

6. Dispositif d'actionnement selon la revendication 5, dans lequel un capteur, par exemple une cellule de charge (13) destinée à mesurer des forces axiales, est disposé entre la butée (9) et l'écrou (10).

7. Dispositif d'actionnement selon la revendication 5 ou 6, dans lequel un manchon (12), qui s'étend vers l'intérieur par rapport à l'alésage (8) à l'extrémité orientée à l'écart de l'élément d'actionnement (19), est prévu, ledit manchon (12) à une extrémité ayant une bride s'étendant vers l'extérieur (11) qui est maintenue entre l'écrou (10) et la butée s'étendant vers l'intérieur (9), et à l'autre extrémité possède un support (30) pour les moyens de réduction à engrenage (6).

8. Dispositif d'actionnement selon la revendication 7, dans lequel le support (30) comporte un palier à élément de roulement (31), dont la bague extérieure (33) porte une roue dentée excentrée (36) avec des dents qui pointent vers l'extérieur qui est une partie d'une réduction à pignon excentré (6), ladite roue dentée excentrée (36) étant reçue de façon rotative sur un moyeu excentré (40) de ladite bague extérieure (33) au moyen d'un palier excentré (41).

9. Dispositif d'actionnement selon la revendication 8, dans lequel la vis (14) peut être entraînée par l'intermédiaire d'un arbre d'entraînement (29) au moyen d'une liaison à rainure/cannelure (bille) (28), ledit arbre d'entraînement (29) portant une roue dentée (37) avec des dents qui pointent vers l'intérieur qui entourent les dents de la roue dentée excentrée (36), les roues dentées (36, 37) étant en prise avec seulement une partie de leurs dents.

10. Dispositif d'actionnement selon l'une quelconque des revendications 6 à 9, dans lequel les moyens de réduction à engrenage comportent une réduction à train planétaire.

11. Dispositif d'actionnement selon la revendication 10, dans lequel les moyens de réduction à engrenage comportent une réduction à engrenage excentré.

12. Dispositif d'actionnement selon la revendication 8, 9, 10 ou 11, dans lequel la bague extérieure (33) du palier à élément de roulement (31) porte un manchon de rotor (39) sur lequel est monté le rotor (34) du moteur (5).

13. Dispositif d'actionnement selon la revendication 12, dans lequel la bague extérieure du palier à élément de roulement et le manchon de rotor sont intégrés dans un composant.

14. Dispositif d'actionnement selon la revendication 12 ou 13, dans lequel un capteur est monté entre le boîtier et le manchon de rotor.

15. Dispositif d'actionnement selon l'une quelconque des revendications précédentes, dans lequel les filets de vis (16,40,17,22) de la vis (14), de l'écrou (10) et de l'élément d'actionnement (19) s'engagent l'un l'autre par l'intermédiaire de billes (15,23).

16. Dispositif d'actionnement selon la revendication 15, dans lequel le filet de vis (17) de l'écrou (10), la partie de filet de vis correspondante (16) de la vis (14) et les billes respectives (15) sont d'une taille différente de la taille du filet de vis (16) de l'élément d'actionnement (19), de la partie de filet de vis (40) de la vis (14) et des billes respectives (23).

17. Dispositif d'actionnement selon la revendication 15 ou 16, dans lequel l'écrou (10) comporte au moins un dispositif de circulation (18) pour les billes (15) dans un enroulement complet entre l'écrou (10) et la vis (14).

18. Dispositif d'actionnement selon la revendication 15, 16 ou 17, dans lequel la vis (14) comporte au moins un dispositif de circulation (24) pour les billes (23) dans un enroulement complet entre la vis (14) et l'élément d'actionnement (19).

19. Dispositif d'actionnement selon la revendication 18, dans lequel la vis (14) a un alésage traversant (27), dont une extrémité comporte des rainures pour la liaison à rainure/cannelure (bille) (28) sur l'arbre d'entraînement (29), et dont l'autre extrémité comporte un manchon interne (26) qui supporte le dispositif de circulation (24).

20. Dispositif d'actionnement selon la revendication 19, dans lequel le manchon est une partie d'une unité de dosage de graisse auto-contenue.

21. Dispositif d'actionnement selon l'une quelconque des revendications précédentes, dans lequel au moins un des composants est obtenu au moyen de la métallurgie des poudres.

22. Etrier de frein, comportant une pièce de pince (3) qui porte au moins deux plaquettes de frein (4) entre lesquelles peut être reçu un disque de frein, et un dispositif d'actionnement (1) selon l'une quelconque des revendications précédentes, ledit dispositif d'actionnement (1) comportant un boîtier (2) relié à la pièce de pince (3), un moteur (5), un élément d'actionnement (19) et un mécanisme à vis (7) ayant un écrou (10) et une vis (14), ledit mécanisme à vis (7) assurant un mouvement linéaire de l'élément d'actionnement (19) par rapport au boîtier (2) en réponse à un mouvement de rotation délivré par le moteur (5), ainsi que des moyens de réduction à engrenage (6) entre le moteur (5) et le mécanisme à vis (7), l'écrou (10) étant fixe par rapport au boîtier (2), et l'élément d'actionnement (19) ayant un alésage (21) qui est pourvu d'un filet de vis interne (22), la vis (14) engageant à la fois le filet de vis interne (22) de l'élément d'actionnement (19) et le filet de vis interne (17) de l'écrou (10), **caractérisé en ce que** le filet de vis interne (22) de l'élément d'actionnement (19) a un angle de pas qui est opposé à l'angle de pas du filet de vis interne (17) de l'écrou (10), et **en ce que** les moyens de réduction à engrenage (6) sont prévus entre le moteur (5) et le mécanisme à vis (7).
